# NEW EUROPEAN PATENT SPECIFICATION

(11) **EP 0 357 447 B2**
(45) Date of publication and mention of the opposition decision: **09.09.1998**
(45) Mention of the grant of the patent: 29.06.1994
(21) Application number: 89308865.8
(22) Date of filing: 01.09.1989
(51) Int. Cl.: G11B 7/085

(54) **Control method for accessing a track of an optical disk in an optical disk apparatus**
Spurzugriffssteuerungsmethode für eine optische Scheibe in einem Gerät mit optischen Scheiben
Méthode d'accès aux pistes pour un disque optique dans un appareil de disques optiques

(30) Priority: 02.09.1988 JP 220713/88
(43) Date of publication of application: 07.03.1990
(73) Proprietor: SHARP KABUSHIKI KAISHA, Osaka-shi, Osaka-fu 545 (JP)
(72) Inventor: Sakamoto, Noriaki, Souraku-gun Kyoto (JP); Yamane, Daiji, Tenri-shi Nara (JP); Nishioka, Yoshiki, Tenri-shi Nara (JP); Sugiura, Teruki, Yamatokouriyama-shi Nara (JP); Taguchi, Aisaku, Tenri-shi Nara (JP)
(74) Representative: Brown, Kenneth Richard

(56) References cited:
- EP-A- 90 379
- DE-A- 3 245 000
- DE-A- 3 543 568
- PATENT ABSTRACTS OF JAPAN vol. 12, no. 163 (P-703)(3010) 18 May 1988, & JP-A-62 277629
- SPIE, Optical Mass Data Storage II vol. 659, no. 21, 22 August 1986, Bellingham,WA;USA pages 138 - 140; E: Bates et al.: "Seek techniques for the Optotech 5984 optical disk drive"

## Description

The present invention relates to a control method and tracking system for accessing a track of an optical disk in an optical disk apparatus, and more particularly, to a control method and tracking system for driving a tracking actuator in the optical disk apparatus responsive to a jump trigger pulse so as to access a target track of the optical disk.

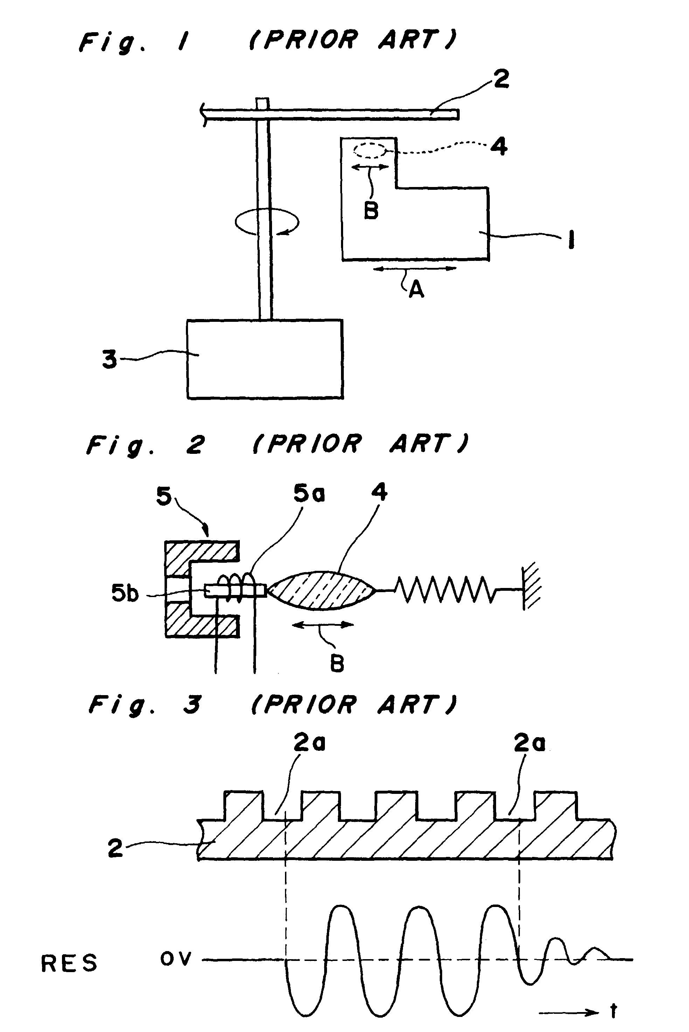

Fig. 1 shows essential elements of an optical disk reproduction apparatus, schematically.

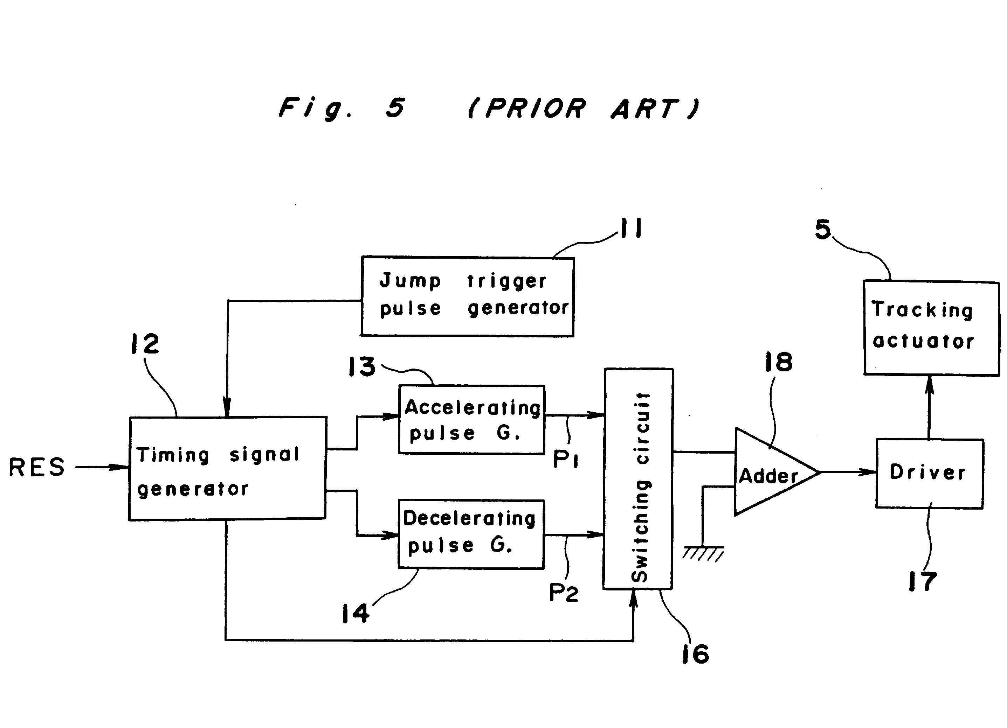

As is well known to those skilled in the art, the optical disk reproduction apparatus provides a light pickup 1 for accessing a target track of an optical disk 2 which is rotated by a spindle motor 3. The light pickup 1 is driven so as to move in right and left directions on the drawing, namely in a radius direction of the optical disk 2 by a driving mechanism (not shown) including a driving motor, as indicated by an arrow A. An objective lens 4 installed in the light pickup 1 is driven also in the radius direction B of the optical disk 2 by a tracking actuator 5 as shown in Fig. 5.

In a conventional control method for accessing a target track of the optical disk 2, there are provided a rough search for moving the light pickup 1 in the right and left directions in Fig. 1 so as to move the light pickup 1 to the vicinity of the target track quickly, and a minute search for moving the objective lens 4 from the position given by the rough search to the target track.

In the above minute search, when a jump pulse is applied to a coil 5a of the tracking actuator 5, an amortisseur 5b is moved in a direction indicated by the arrow B so that the optical axis of the objective lens 4 connected to the amortisseur 5b is moved in this direction as shown in Fig. 2. There are provided a single jump for going across one track of the optical disk 2 responsive to one jump pulse, and a macrojump for going across plural tracks of the optical disk 2 responsive to one jump pulse.

Fig. 3 shows one example of a waveform of a tracking servo error signal RES outputted from a tracking servo circuit (not shown) for controlling the rotation of the spindle motor 3 upon a macrojump for going across three tracks 2a of the optical disk 2.

Fig. 4a is a timing chart shoving a jump trigger pulse, a jump pulse, and a tracking servo error signal RES in the conventional signal jump control, and Fig. 4b is a timing chart showing a jump trigger pulse, a jump pulse, and a tracking servo error signal RES in the conventional macrojump control. In Figs. 4a and 4b, P₁ denotes an accelerating pulse for accelerating the movement of the objective lens 4, and P₂ denotes a decelerating pulse for decelerating the movement of the objective lens 4.

Fig. 5 is a schematic block diagram of a conventional jumping control circuit.

Referring to Fig. 5, the tracking servo error signal RES outputted from the tracking servo circuit and the jump trigger pulse generated by a jump trigger pulse generator 11 are input to timing signal circuit 12.

Responsive to the tracking servo error signal RES and the jump trigger pulse, the timing signal generator 12 generates timing signals and a switching control signal at predetermined timings, respectively, so as to output them to an accelerating pulse generator 13, a decelerating pulse generator 14, and a switching circuit 16. Responsive to the timing signal, the accelerating pulse generator 13 outputs an accelerating pulse P₁ having a predetermined positive voltage to the switching circuit 16. Responsive to the timing signal, the decelerating pulse generator 14 outputs a decelerating pulse P₂ having a predetermined negative voltage to the switching circuit 16. The switching circuit 16 outputs either the accelerating pulse P₁ or the decelerating pulse P₂ selectively as a driving pulse at a predetermined timing based on the switching control signal to the tracking actuator 5 through an adder 18 and a driver 17.

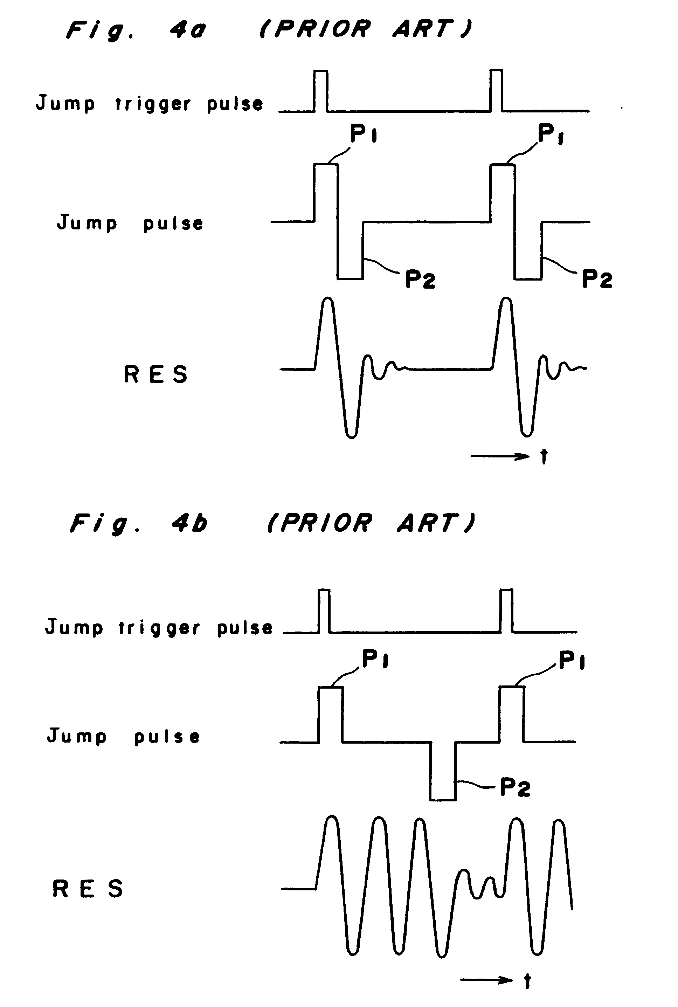

As shown in Fig. 4b, in the macrojump control, a small oscillation of the actuator 5 is scanned after the decelerating pulse P₂ is input thereto. Since the ratio of the jumping time to the track accessing time is considerably large, it is necessary to settle the jump properly so as to attenuate the above oscillation quickly in order to reduce the track accessing time. However, conventionally, between the accelerating pulse P₁ and the decelerating pulse P₂, zero volt voltage is applied to the coil 5a of the tracking actuator 5, or both the terminals of the coil 5a are made an open state so that any current does not flow in the coil 5a of the actuator 5. Therefore, the setting time required for settling the jump varies and the jump action becomes unstable because the objective lens 4 is swung back and also the position thereof is controlled by only an inertia force, and it is difficult to settle the jump properly. The above setting time varies depend on the action characteristics of the actuator 5, and the above oscillation may continue until the next accelerating pulse is applied thereto. In this case, the jump operation may become unstable, and the time required for performing the jump operation may become relatively long.

JP-A-62-277629 and corresponding Patent Abstracts of Japan, Vol. 12, No. 163 (B-703)(3010) which reflect the preamble of the independent claims describe a tracking servo pull-in method for improving the quality of reproduced pictures by applying an acceleration pulse to an actuator for a prescribed period of time and subsequently applying a deceleration pulse, wherein the level and the length of the deceleration pulse are controlled in response to the frequency of a tracking error signal.

It would be desirable to provide a control method and apparatus for accessing a track of an optical disk in an optical disk apparatus which is able to reduce the above setting time in order to access a target track quickly.

In accordance with a first aspect of the present invention there is provided a method for moving an objective lens in an optical head assembly across the tracks of an optical medium wherein an objective lens accelerating pulse and an objective lens decelerating pulse are applied sequentially to a drive means for altering the position of the objective lens across the tracks of said optical medium, characterised in that a positive or negative direct current voltage is applied to said drive means between said accelerating pulse and said decelerating pulse.

In accordance with a second aspect of the present invention, there is provided a tracking system for an optical disk apparatus wherein for changing track a first accelerating pulse and a second decelerating pulse are applied to an actuator to respectively initiate and terminate the required movement, characterised in that a positive or negative direct current voltage is applied to said actuator between said first and second pulses.

These and other features of the present invention will become clear from the following description taken in conjunction with the preferred embodiments thereof with reference to the accompanying drawings, in which:
Fig. 1 is a schematic longitudinal view showing a conventional tracking actuator;
Fig. 2 is a schematic cross sectional view showing a conventional tracking actuator;
Fig. 3 shows a relationship between tracks of an optical disk and a tracking servo error signal RES;
Fig. 4a is a timing chart showing a jump trigger pulse, a jump pulse, and a tracking servo error signal RES in the conventional single jump control;
Fig. 4b is a timing chart showing a jumping trigger pulse, a jump pulse, and a tracking servo error signal RES in the conventional macrojump control;
Fig. 5 is a schematic block diagram of a conventional jumping control circuit;

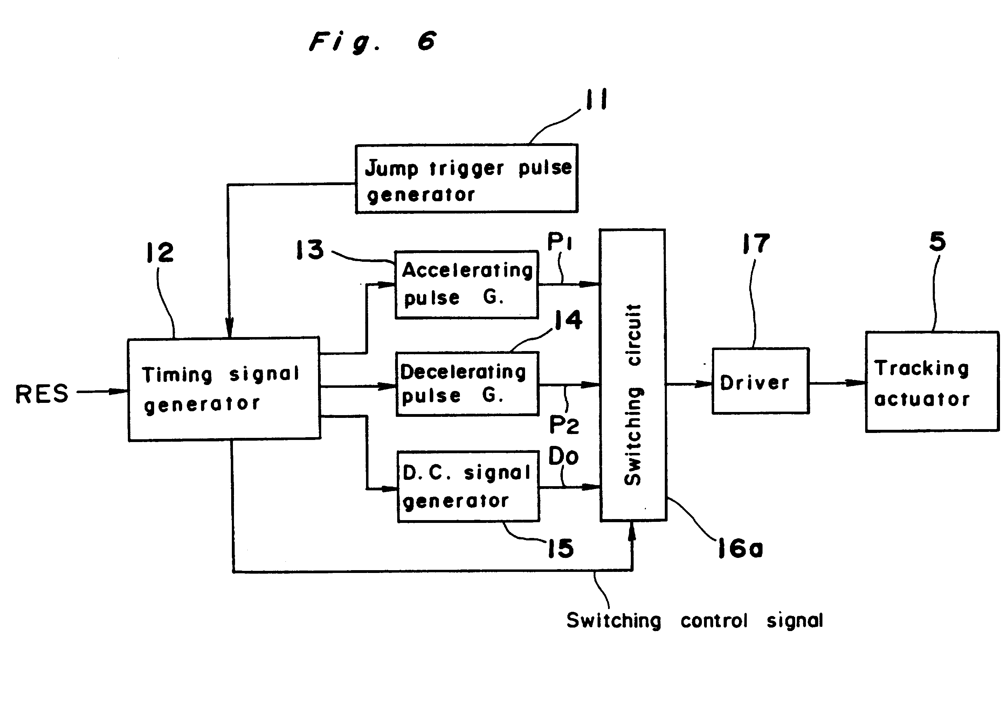

Fig. 6 is a schematic block diagram of a jumping control circuit of an preferred embodiment according to the present invention; and

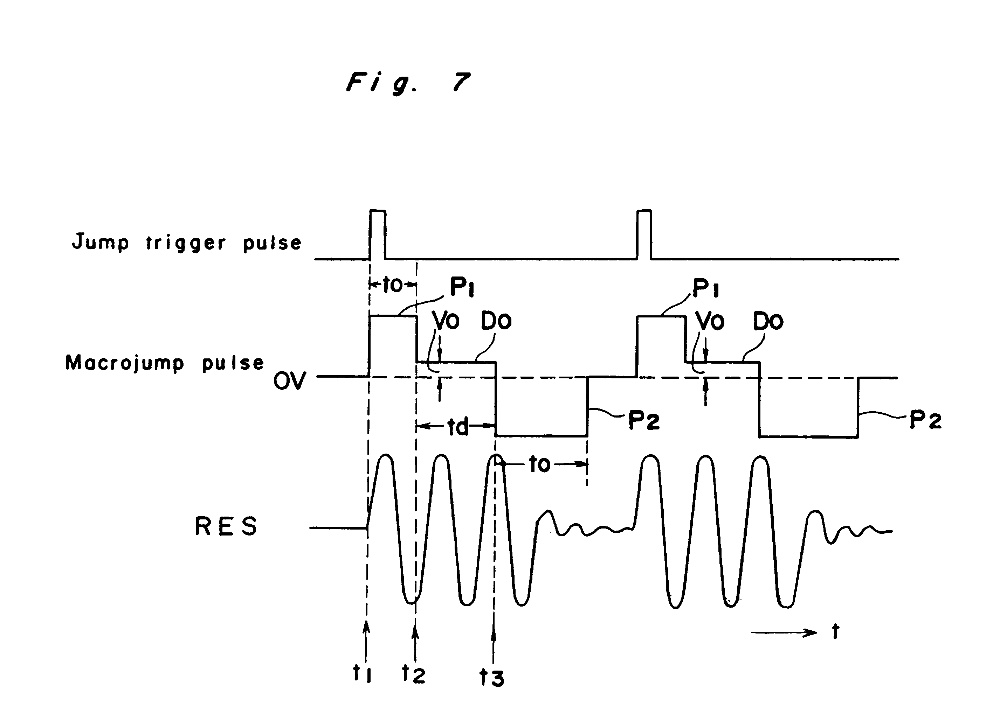

Fig. 7 is a timing chart showing a jump trigger pulse, a macrojump pulse, and a tracking servo error signal RES in the jumping control circuit shown in Fig. 6.

A preferred embodiment according to the present invention will be described below with reference to the attached drawings.

Fig. 6 shows a jumping control circuit of the preferred embodiment according to the present invention. In Fig. 6, the same things as that shown in Fig. 5 are denoted by the same symbols, respectively.

As is apparent from the comparison between Fig. 5 and Fig. 6, the jumping control circuit of the present preferred embodiment is characterized in that a direct current signal generator 15 is provided in addition to the jumping control circuit shown in Fig. 5, and a switching circuit 16a for selectively outputting one of the signals outputted from the generators 13, 14 and 15 to the tracking actuator 5 through the driver 17 is provided in place of the switching circuit 16.

Referring to Fig. 6, a tracking servo error signal RES outputted from a tracking servo circuit (not shown) is input to the timing signal generator 12. The jump trigger pulse generator 11 generates the jump trigger pulse so as to output it to the timing signal generator 12 in both the signal jump control and the macrojump control.

Responsive to a jump trigger pulse and a tracking servo error signal RES, the timing signal generator 12 generates timing signals and a switching control signal at predetermined timings so as to output them to the accelerating pulse generator 13, the decelerating pulse generator 14, a direct current signal generator 15 and a switching circuit 16a. Namely, in the signal jump control, after outputting a timing signal to the accelerating pulse generator 13 upon moving the objective lens 4 by a pitch between a track of the optical disk 2 and the adjacent track thereof, the timing signal generator 12 outputs a timing signal to the decelerating pulse generator 14 at the trailing edge of the accelerating pulse P₁.

On the other hand, in the macrojump control, after outputting a timing signal to the accelerating pulse generator 13 upon moving the objective lens 4 by plural pitches, the timing signal generator 12 outputs a timing signal to the direct current signal generator 15 at the trailing edge of the accelerating pulse P₁. After a period t_{d} therefrom, the timing signal generator 12 outputs a timing signal to the decelerating pulse generator 14.

Responsive to the timing signal, the accelerating pulse generator 13 outputs the accelerating pulse having a predetermined positive voltage and a predetermined pulse width tₒ to the switching circuit 16a. Responsive to the timing signal, the decelerating pulse generator 14 outputs the decelerating pulse having a predetermined negative voltage and a predetermined pulse width tₒ to the switching circuit 16a. Responsive to the timing signal, the direct current signal generator 15 outputs a positive direct current voltage D₀ for the period t_{d} to the switching circuit 16a.

The switching circuit 16a outputs either of the accelerating pulse P₁, the decelerating pulse P₂ or the direct current voltage Dₒ selectively as a driving pulse at a predetermined timing based on the switching control signal to the tracking actuator 5 through the driver 17.

The action of the macrojump control of the jump control circuit shown in Fig. 6 will be described below, referring to a timing chart shown in Fig. 7.

At a timing t₁ upon moving the objective lens 4 by plural pitches, a jump trigger pulse is generated by the jump trigger generator 11, and responsive to the jump trigger pulse, a timing signal is generated by the timing signal generator 12 and is input to the accelerating pulse generator 13. Then, the accelerating pulse P₁ is generated by the accelerating pulse generator 13 and is outputted to the tracking actuator 5 through the switching circuit 16a and the driver 17.

At a timing t₂ being the trailing edge of the accelerating pulse P₁, a timing signal is generated by the timing signal generator 12 and is input to the direct current signal generator 15. Then, the direct current voltage D₀ is generated for the period t_{d} by the direct current signal generator 15 and is applied to the tracking actuator 5 through the switching circuit 16a and the driver 17.

Therefore, for the period between the timings t₁ and t₃, the objective lens 4 is moved by predetermined plural pitches so as to jump plural tracks.

At a timing t₃ after the period t_{d} from the timing t₂, the timing signal is generated by the timing signal generator 12 and is input to the decelerating pulse generator 14. Then, a decelerating pulse P₂ is generated by the decelerating pulse generator 14 and is applied to the tracking actuator 5 through the switching circuit 16a and the driver 17.

After the trailing edge of the decelerating pulse P₂, the objective lens 4 is positioned at a position facing a distinction track. Then, the action of the macrojump control is completed.

As described above, the direct current voltage D₀ is applied to the coil 5a of the tracking actuator 5 for the period t_{d} between the accelerating pulse P₁ and the decelerating pulse P₂. Therefore, since a predetermined force is applied to the objective lens 4 by the actuator 5 responsive to the direct current voltage D₀ as soon as the accelerating pulse P₁ is applied thereto, the action of swinging back of the objective lens 4 is suppressed, and the jump operation can be performed stably as compared with the conventional apparatus, resulting in that the above setting time can be reduced, and a target track of the optical disk 2 can be accessed at a higher speed.

In the above preferred embodiment, the positive direct current voltage D₀ is applied to coil 5a of the actuator 5 after applying the accelerating pulse P₁ thereto, however, a negative direct current voltage may be applied thereto depending on the action characteristics of the actuator 5. Furthermore, the level of the direct current voltage D₀ may be determined depending on the action characteristics of the actuator 5.

## Claims

1. A method for moving an objective lens (4) in an optical head assembly (1) across the tracks of an optical medium (2) wherein an objective lens accelerating pulse (P₁) and an objective lens decelerating pulse (P₂) are applied sequentially to a drive means (17) for altering the position of the objective lens (4) across the tracks of said optical medium (2), characterised in that a positive or negative direct current voltage (D₀) is applied to said drive means (17) between said accelerating pulse and said decelerating pulse.

2. A control method for accessing a track of an optical disk (2) in an optical disk apparatus, for a macrojump control for jumping a plurality of tracks so that an objective lens (4) of a light pickup (1) is positioned at a position facing a target track, wherein the objective lens (4) is moved in accordance with the method of claim 1, said accelerating pulse (P₁) being generated in response to a jump trigger pulse and applied to a tracking actuator (5) for moving said objective lens (4) so that said objective lens (4) jumps said plurality of tracks;
said direct current voltage (D₀) being applied to said tracking actuator (5) after said accelerating pulse and said decelerating pulse (P₂) being applied to said tracking actuator (5) after said direct current voltage (D₀) so that said objective lens (4) is positioned at the position facing said target track.

3. A method as claimed in claim 2, wherein the level of said direct current voltage (D₀) is predetermined depending on action characteristics of said tracking actuator (5).

4. A method as claimed in any preceding claim, wherein said direct current voltage (D₀) is positive.

5. A method as claimed in any one of claims 1 to 3, wherein said direct current voltage (D₀) is negative.

6. A tracking system for an optical disk apparatus wherein for changing track a first accelerating pulse (P₁) and a second decelerating pulse (P₂) are applied to an actuator (5) to respectively initiate and terminate the required movement, characterised in that a positive or negative direct current voltage (D₀) is applied to said actuator between said first (P₁) and second (P₂) pulses.

7. A system as claimed in claim 6, comprising an optical head assembly comprising:
an objective lens (4);
control means (11-16,18) for generating said first (P₁) and second (P₂) pulses and said direct current voltage (D₀); and
drive means (17) operable in response to said pulses and said voltage to cause said actuator (5) to alter the position of said objective lens (4).

## Patentansprüche

1. Verfahren zum Verstellen einer Objektivlinse (4) in einer Optikkopfanordnung (1) über die Spuren eines optischen Mediums (2), bei dem ein Objektivlinsen-Beschleunigungsimpuls (P₁) und Objektivlinsen-Verzögerungsimpuls (P₂) aufeinanderfolgend an eine Antriebseinrichtung (17) angelegt werden, um die Position der Objektivlinse (4) über die Spuren des optischen Mediums (2) zu verändern, **dadurch gekennzeichnet**, daß zwischen dem Beschleunigungsimpuls und dem Verzögerungsimpuls eine positive oder negative Gleichspannung (D₀) an die Ansteuereinrichtung (17) angelegt wird.

2. Steuerungsverfahren zum Zugreifen auf eine Spur auf einer optischen Platte (2) in einem optischen Plattengerät, für eine Makrosprungsteuerung zum Überspringen mehrerer Spuren in solcher Weise, daß eine Objektivlinse (4) eines Lichtaufnehmers (1) an einer einer Zielspur gegenüberstehenden Position angeordnet wird, wobei die Objektivlinse (4) abhängig vom Verfahren nach Anspruch 1 verstellt wird, wobei der Beschleunigungsimpuls (P₁) auf einen Sprungtriggerimpuls hin erzeugt wird und an ein Spurnachführungs-Stellglied (5) zum Verstellen der Objektivlinse (4) so angelegt wird, daß die Objektivlinse (4) die mehreren Spuren überspringt;
- wobei die Gleichspannung (D₀) an das Spurnachführungs-Stellglied (5) nach dem Beschleunigungsimpuls angelegt wird und der Verzögerungsimpuls (P₂) an das Spurnachführungs-Stellglied (5) nach der Gleichspannung (D₀) so angelegt wird, daß die Objektivlinse (4) an der der Zielspur gegenüberstehenden Position angeordnet wird.

3. Verfahren nach Anspruch 2, bei dem der Pegel der Gleichspannung (D₀) abhängig von Funktionseigenschaften des Spurnachführungs-Stellglieds (5) vorgegeben wird.

4. Verfahren nach einem der vorstehenden Ansprüche, bei dem die Gleichspannung (D₀) positiv ist.

5. Verfahren nach einem der Ansprüche 1 bis 3, bei dem die Gleichspannung (D₀) negativ ist.

6. Spurnachführungssystem für ein optisches Plattengerät, bei dem zur Spuränderung ein erster Beschleunigungsimpuls (P₁) und ein zweiter Verzögerungsimpuls (P₂) an ein Stellglied (5) angelegt werden, um die erforderliche Bewegung auszulösen bzw. zu beenden, **dadurch gekennzeichnet,** daß zwischen dem ersten (P₁) und zweiten (P₂) Impuls eine positive oder negative Gleichspannung (D₀) an das Stellglied angelegt wird.

7. System nach Anspruch 6, mit einer Optikkopfanordnung mit:
- einer Objektivlinse (4);
- einer Steuereinrichtung (11 - 16, 18) zum Erzeugen des ersten (P₁) und zweiten (P₂) Impulses und der Gleichspannung (D₀); und
- einer Ansteuereinrichtung (17), die auf die genannten Impulse und die genannte Spannung hin so betätigt wird, daß sie das Stellglied (5) dazu veranlaßt, die Position der Objektivlinse (4) zu verändern.

## Revendications

1. Procédé pour déplacer une lentille d'objectif (4) dans un ensemble de tête optique (1), en travers des pistes d'un support optique (2), dans lequel une impulsion (P₁) d'accélération de la lentille d'objectif et une impulsion (P₂) de décélération de la lentille d'objectif sont appliquées séquentiellement à un moyen d'attaque (17) pour modifier la position de la lentille d'objectif (4) en travers des pistes dudit support optique (2), caractérisé en ce qu'une tension continue positive ou négative (D₀) est appliquée audit moyen d'attaque (17) entre ladite impulsion d'accélération et ladite impulsion de décélération.

2. Procédé de commande pour accéder à une piste d'un disque optique (2) dans un appareil à disque optique, pour une commande de macro-saut servant à sauter une pluralité de pistes de telle façon qu'une lentille d'objectif (4) d'un capteur de lumière (1) soit positionnée dans une position face à une piste cible, dans lequel la lentille d'objectif (4) est déplacée selon le procédé de la revendication 1, ladite impulsion d'accélération (P₁) étant engendrée en réponse à une impulsion de déclenchement de saut et appliquée à un actionneur (5) de suivi de piste pour déplacer ladite lentille d'objectif (4) de telle manière que ladite lentille d'objectif (4) saute ladite pluralité de pistes ;
ladite tension continue (D₀) étant appliquée audit actionneur de suivi de piste (5) après ladite impulsion d'accélération, et ladite impulsion de décélération (P₂) étant appliquée audit actionneur de suivi de piste (5) après ladite tension continue (D₀), de sorte que ladite lentille d'objectif (4) est positionnée dans la position face à ladite piste cible.

3. Procédé selon la revendication 2, dans lequel le niveau de ladite tension continue (D₀) est prédéterminé en fonction des caractéristiques d'action dudit actionneur de suivi de piste (5).

4. Procédé selon une quelconque des revendications précédentes, dans lequel ladite tension continue (D₀) est positive.

5. Procédé selon une quelconque des revendications 1 à 3, dans lequel ladite tension continue (D₀) est négative.

6. Système de suivi de piste pour un appareil à disque optique dans lequel, pour changer de piste, une première impulsion d'accélération (P₁) et une deuxième impulsion de décélération (P₂) sont appliquées à un actionneur (5), respectivement pour démarrer et arrêter le mouvement requis, caractérisé en ce qu'une tension continue positive ou névative (D₀) est appliquée audit actionneur entre ladite première impulsion (P₁) et ladite deuxième impulsion (P₂).

7. Système selon la revendication 6, comprenant un ensemble de tête optique qui comprend lui-même :
une lentille d'objectif (4) ;
des moyens de commande (11-16, 18) servant à engendrer lesdites première (P₁) et deuxième (P₂) impulsions et ladite tension continue (D₀) ; et
un moyen d'attaque (17) qui commande ledit actionneur (5) pour modifier la position de ladite lentille d'objectif (4) en réponse auxdites impulsions et à ladite tension.
